# EUROPÄISCHE PATENTSCHRIFT

(11) **EP 3 156 112 B1**
(45) Veröffentlichungstag und Bekanntmachung des Hinweises auf die Patenterteilung: **27.06.2018**
(21) Anmeldenummer: 16188462.2
(22) Anmeldetag: 13.09.2016
(51) Int. Cl.: B01D 35/18, B01D 36/00, B01D 29/21, B01D 29/60, B01D 29/96

(54) **FILTERELEMENT MIT ZENTRALELEMENT FÜR EIN FILTERSYSTEM**
FILTER ELEMENT WITH CENTRAL ELEMENT FOR A FILTER SYSTEM
ÉLEMENT DE FILTRE COMPRENANT UN ELEMENT CENTRAL POUR UN SYSTEME DE FILTRE

(30) Priorität: 29.09.2015 DE 102015012473
(43) Veröffentlichungstag der Anmeldung: 19.04.2017
(73) Patentinhaber: MANN + HUMMEL GMBH, 71636 Ludwigsburg (DE)
(72) Erfinder: Opletal, Marc, 71691 Freiberg (DE); Kraft, Gunther, 71642 Ludwigsburg (DE); Wildermuth, Andreas, 71672 Marbach (DE); Meinhold, Steffen, 78727 Oberndorf (DE); Beylich, Markus, 71636 Ludwigsburg (DE); Thomann, Frank, 69469 Weinheim (DE)
(74) Vertreter: Seyboth, Matthias

(56) Entgegenhaltungen:
- WO-A1-2015/057809
- DE-A1-102011 078 362
- DE-A1-102013 009 198
- US-A1- 2002 144 938

## Beschreibung

### Technisches Gebiet

Die Erfindung betrifft ein Filterelement mit Zentralelement für ein Filtersystem, insbesondere für einen Kraftstofffilter einer Brennkraftmaschine, sowie ein Filtersystem mit einem solchen Filterelement.

### Stand der Technik

Aus der DE 10 2013 009 198 A1 ist ein Kraftstofffilter mit einem Filtergehäuse und mit einem elementseitigen und einem gehäuseseitigen elektrischen Anschlusselement bekannt, bei dem das elementseitige und das gehäuseseitige Anschlusselement bei einem in das Filtergehäuse eingebauten Filterelement elektrisch miteinander verbunden sind. In dem Filtergehäuse ist eine Führungsrampe mit einer Rampenfläche angeordnet. Beim Einstecken des Filterelements in das Filtergehäuse in axialer Richtung zur Filterachse mit der Anschlussstirnseite voran stoßen das elementseitige Anschlusselement und ein anderer Abschnitt der Anschlussstirnseite gegen die Rampenfläche. Durch Drehen des Filterelements im Filtergehäuse um die Filterachse in einem Drehsinn, der dem schraubenartigen Verlauf der Rampenfläche entspricht, und gleichzeitiges Bewegen des Filterelements in axialer Richtung auf die Anschlussstirnseite des Filtergehäuses zu wird das Filterelement entlang der Rampenfläche geführt. Am Ende der Rampenfläche ist das gehäuseseitige elektrische Anschlusselement angeordnet. Das elementseitige Anschlusselement verbindet sich dann elektrisch mit dem gehäuseseitigen Anschlusselement. Auf diese Weise wird das Filterelement in der korrekten Einbaulage im Filtergehäuse positioniert. Das Schließen der elektrischen Verbindung erfolgt durch die Dreh-/Steckbewegung des Filterelements.

### Offenbarung der Erfindung

Eine Aufgabe der Erfindung ist es, ein Filterelement für ein Filtersystem zu schaffen, das eine einfache und sichere Ausrichtung bei der Montage in einem Filtergehäuse ermöglicht, so dass das Filterelement zuverlässig elektrisch kontaktierbar ist.

Eine weitere Aufgabe der Erfindung ist es, ein Filtersystem zur Aufnahme eines solchen austauschbaren Filterelements zu schaffen, das eine einfache und sichere Ausrichtung bei der Montage in einem Filtergehäuse ermöglicht, so dass das Filterelement zuverlässig elektrisch kontaktierbar ist.

Die vorgenannten Aufgaben werden nach einem Aspekt der Erfindung gelöst von einem Filterelement, das ein drehbar angeordnetes Zentralelement umfasst, wobei das Zentralelement ein oder mehrere Positionierungselemente aufweist, welche bei bestimmungsgemäßer Montage zum Zusammenwirken mit einem oder mehreren Positionierungsgegenelementen eines Gehäuseoberteils eines Filtergehäuses eines Filtersystems vorgesehen sind.

Günstige Ausgestaltungen und Vorteile der Erfindung ergeben sich aus den weiteren Ansprüchen, der Beschreibung und der Zeichnung.

Es wird ein Filterelement zum Filtern eines Fluids mit einer Längsachse, vorgeschlagen, das einen um die Längsachse angeordneten Filterbalg mit einer ersten Endscheibe an einer ersten Stirnseite und einer zweiten Endscheibe an einer zweiten Stirnseite sowie ein im Inneren des Filterbalgs um die Längsachse relativ zum Filterbalg drehbar angeordnetes Zentralelement umfasst. Dabei weist das Zentralelement ein oder mehrere Positionierungselemente auf, welche bei bestimmungsgemäßer Montage zum Zusammenwirken mit einem oder mehreren Positionierungsgegenelementen eines Gehäuseoberteils eines Filtergehäuses eines Filtersystems vorgesehen sind, um das Zentralelement in dem Gehäuseoberteil in einer definierten Winkellage zu den ein oder mehreren Positionierungsgegenelementen zu fixieren. Das Zentralelement weist wenigstens ein elementseitiges elektrisches Anschlusselement auf, das bei bestimmungsgemäßer Montage in dem Filtergehäuse zur elektrischen Kontaktierung wenigstens eines gehäuseseitigen elektrischen Anschlusselements vorgesehen ist. Das elementseitige elektrische Anschlusselement kann dabei zur elektrischen Kontaktierung zwischen einem im Zentralelement angeordneten WIF-Sensor und einer Heizungsplatine, die im Gehäuseoberteil angeordnet ist und über das gehäuseseitige elektrische Anschlusselement kontaktiert werden kann, dienen.

Erfindungsgemäß handelt es sich um ein Filterelement mit integrierten Ausrichtungselementen, welche es erlauben, das Filterelement bei der Montage in einer bestimmten Position auszurichten. Diese Position ist für eine weitere Montage an dem Filterelement, beispielsweise von elektrischen Anschlusselementen, vorteilhaft. Die Montageposition wird durch ein Zusammenspiel der Positionierungselemente am Filterelement und einer dafür notwendigen Geometrie von Positionierungsgegenelementen am Filtergehäuse, in das das Filterelement montiert wird, erreicht. Dadurch wird eine positionsgesteuerte Montage eines Filterelements ermöglicht.

Beispielsweise können sich in dem Filterelement Elektroden in Form eines sog. Waterin-Fuel (WIF)-Sensors befinden, der die Aufgabe hat, den Wasserstand des aus dem Dieselkraftstoff filtrierten Wassers bei einem definierten Füllstand zu melden. Dazu soll eine elektrische Verbindung zwischen den Elektroden im Filterelement und einer im Filtergehäuse angeordneten Heizung hergestellt werden, wobei Kontaktierungspins einer Platine der Heizung relativ zum Filtergehäuse in einer definierten und festen Position im Filtergehäuse angeordnet sind.

Bei der Montage des Filterelements im Filtergehäuse wird das Filterelement in das Gehäuseunterteil, welches beispielsweise den Deckel des Filtergehäuses darstellt, eingebracht und dann das Gehäuseunterteil auf das Gehäuseoberteil aufgesetzt und mit diesem verschraubt. Der Filterbalg des Filterelements sitzt dazu beim Einsetzen mit einer ersten an einer ersten Endscheibe des Filterbalgs radial außen umlaufenden Dichtung, beispielsweise einem O-Ring, in dem Gehäuseunterteil und ist durch das Reibmoment der Dichtung auf der Innenseite des Gehäuseunterteils gegen relatives Verdrehen des Filterbalgs gegen das Gehäuseunterteil gesichert. Mit herkömmlichen Werkstoffen von O-Ringen kann so ein Reibmoment von größenordnungsmäßig 10 Nm auf eine Kunststoffoberfläche wie beispielsweise auf das Gehäuseunterteil übertragen werden. Das Gehäuseunterteil mit eingesetztem Filterelement wird auf das Gehäuseoberteil aufgesetzt und in der Gehäuseachse gegen das Gehäuseoberteil verdreht, um das Gehäuseunterteil in das Gehäuseoberteil einzuschrauben. Dabei dreht sich das relativ um die Längsachse des Filterelements drehbar gelagerte Zentralelement zunächst mit dem Filterbalg mit.

Um nun eine definierte Endposition des Filterelements zu dem Gehäuseoberteil sicherzustellen, sind an dem Zentralelement Positionierungselemente angebracht. Das Gehäuseoberteil weist korrespondierende Positionierungsgegenelemente auf. Beim Drehen des Gehäuseunterteils mit dem eingesetzten Filterelement werden diese Positionierungselemente nach einigen Umdrehungen, wenn das Filterelement mit dem Zentralelement genügend weit in das Gehäuseoberteil eingeschraubt ist, von den Positionierungsgegenelementen im Gehäuseoberteil "gefangen", so dass das Zentralelement stehen bleibt und relativ zum Gehäuseoberteil seine Winkelposition nicht mehr ändert. Da das Zentralelement drehbar im Filterelement gelagert ist, kann das Gehäuseunterteil mit dem eingesetzten Filterelement weiter eingeschraubt werden und die positionierte Ausrichtung des Zentralelements relativ zum Gehäuseoberteil bleibt fest bestehen, so dass eine elektrische Verbindung beispielsweise von WIF-Sensor im Zentralelement und Heizung im Gehäuseoberteil mittels Kontaktierungsstiften stattfinden kann.

Vorteilhaft können die ein oder mehreren Positionierungselemente als parallel zu der Längsachse ausgerichtete Stifte ausgebildet sein. Beispielsweise können zwei sich auf einem Kreisumfang gegenüberliegende Stifte vorgesehen sein, die von Positionierungsgegenelementen im Gehäuseoberteil bei einer Drehung des Gehäuseunterteils gegen das Gehäuseoberteil gefangen werden, so dass dadurch eine feste relative Winkellage zwischen dem Gehäuseoberteil und dem Zentralelement des Filterelements erzielt wird und bei einer weiteren Drehung des Gehäuseunterteils mit eingesetztem Filterelement gegen das Gehäuseoberteil erhalten bleibt. Alternativ ist auch denkbar, als Positionierungselemente Fangelemente einzusetzen, welche dann im Gehäuseoberteil angeordnete Stifte aufgreifen und damit ebenfalls von den Stiften bei einer Drehung des Gehäuseunterteils mit eingesetztem Filterelement gegen das Gehäuseoberteil festgehalten werden und damit die relative Winkelposition zwischen Zentralelement und Gehäuseoberteil fixieren.

Gemäß einer vorteilhaften Ausgestaltung können die Stifte axial über die Endscheibe überstehen, die im montierten Zustand des Filterelements dem Gehäuseoberteil zugewandt ist. Damit können die Stifte leicht mit dem gehäuseseitigen Positionierungsgegenelement in Kontakt gebracht werden, wenn das Filterelement bestimmungsgemäß in ein Gehäuse eingesetzt wird. Vorteilhaft können die Stifte insbesondere aus Kunststoff ausgeführt sein. Dadurch können die Stifte als Fortsetzung einer Kunststoffendscheibe beispielsweise in einem Spritzgussprozess hergestellt werden. Auch ist durch Kunststoffstifte eine elektrische Isolierung gegeben, so dass bei einer zufälligen Berührung von elektrischen Kontakten mit den Stiften kein Kurzschluss erfolgen kann. Kunststoffstifte sind auch in der Formgebung leicht und beliebig gestaltbar, so dass eine Anpassung an komplexe Bauraumvorgaben leicht möglich ist.

Gemäß einer alternativen Ausführungsform kann es sich bei den Positionierungselementen um Rampenabschnitte handeln, die auf zumindest einem Radius umfänglich verlaufen. Die Rampenabschnitte haben also eine Erstreckung in Höhenrichtung, die der Längsrichtung des Filterelements entspricht, und eine Erstreckung normal zur Höhenrichtung in Umfangsrichtung des Filterelements. Das stumpfe Ende der Rampenabschnitte dient hierbei vorteilhafterweise als Anschlag mit den Positionierungsgegenelementen.

Es ist dabei möglich, dass auf dem zumindest einen Radius zwei oder mehr Rampenabschnitte umfänglich verteilt vorliegen.

In einer weiteren Ausführungsform können die als Rampenabschnitte ausgebildeten Positionierungselemente das wenigstens eine elementseitige elektrische Anschlusselement in Längsrichtung überragen und/oder radial umgeben. Auf diese Weise wird ein wirksamer Schutz des elektrischen Anschlusselements vor Beschädigungen ermöglicht.

Gemäß einer Weiterbildung kann das Zentralelement einen Hülsenabschnitt aufweisen, der das wenigstens eine elementseitige elektrische Anschlusselement umgibt und auf dessen Mantelfläche bevorzugt die Rampenabschnitte vorliegen. In dieser Ausführungsform können die Rampenabschnitte zusammen mit dem Hülsenkörper des Zentralelements einstückig als Spritzgussteil hergestellt werden. Durch die Kombination von Rampenabschnitten und Hülsenkörper wird zudem eine erhöhte mechanische Stabilität der Rampenabschnitte erreicht.

Gemäß einer vorteilhaften Ausgestaltung kann das Zentralelement als Siebfilter ausgebildet sein. Ein Siebfilter kann zur effektiven Abscheidung von in Kraftstoff enthaltenem Wasser dienen, insbesondere nach erfolgter Koagulation in einem Koaleszenzmedium von kleinen im Kraftstoff emulgierten Wassertröpfchen zu größeren Wassertröpfchen. Das abgeschiedene Wasser kann dann am Siebfilter schwerkraftbedingt nach unten abfließen und in einem Sammelraum aufgesammelt werden. Der Wasserstand in dem Sammelraum kann dann durch einen im Zentralelement angeordneten oder mit diesem verbundenen WIF-Sensor bestimmt und über die elektrische Verbindung im Zentralelement weitergemeldet werden. Dazu dient dann das elektrische Anschlusselement im Zentralelement, das mit einem gehäuseseitigen elektrischen Anschlusselement kontaktiert werden kann, dem auf diese Weise der Wasserstand weitergemeldet werden kann. Gemäß einer vorteilhaften Ausgestaltung kann im Inneren des Filterbalgs ein Mittelrohr angeordnet sein, welches das Zentralelement radial umgibt, wobei das Mittelrohr auf einer radialen Außenseite oder radialen Innenseite ein flächig angeordnetes Koaleszenzmedium aufweist. Ein Mittelrohr oder Stützrohr kann zweckmäßigerweise im Inneren des Filterbalgs angeordnet sein, um den Filterbalg, der aus einem mechanisch weniger festen Material bestehen kann, mechanisch zu stabilisieren oder abzustützen. Diese Stützfunktion ist besonders vorteilhaft, um den Filterbalg gegen den Fluiddruck des strömenden Fluids, beispielsweise Kraftstoff in einem Kraftstofffilter, abzustützen. Soll das Filterelement auch zur Wasserabscheidung in einem Kraftstofffiltersystem vorgesehen sein, ist es vorteilhaft, das Mittelrohr mit einem Koaleszenzmedium zu umwickeln oder ein Koaleszenzmedium als Matte auf einer radialen Innenfläche des Mittelrohrs anzuordnen. Auf diese Weise können kleine im Kraftstoff emulgierte Wassertröpfchen in dem Koaleszenzmedium zu größeren Wassertröpfchen koaguliert werden, um danach beispielsweise in dem Siebfilter abzutropfen und so aus dem Kraftstoff herausgefiltert zu werden. Ein solches Filterelement kann vorteilhaft zur Wasserabscheidung von in Kraftstoff enthaltenem Wasser eingesetzt werden.

Gemäß einer vorteilhaften Ausgestaltung kann die zweite Endscheibe ein Zentrierelement aufweisen, das zu einem radialen Zentrieren des Filterelements bei einer bestimmungsgemäßen Montage in dem Filtergehäuse vorgesehen ist. Da das Zentralelement drehbar relativ zum Filterbalg angeordnet ist, besteht ein gewisses Spiel zwischen Filterbalg und Zentralelement. Deshalb ist es zweckmäßig, zur präzisen Lagerung des Filterbalgs und damit des Filterelements im Filtergehäuse wenigstens ein Zentrierelement vorzusehen, das vorteilhaft mit der zweiten Endscheibe verbunden oder mit dieser aus einem Stück gefertigt ist. Der Filterbalg ist mit der Endscheibe fest verbunden, so dass darüber der Filterbalg radial günstig zentriert und gelagert werden kann. Auch ist darüber eine zuverlässige Abdichtung zwischen Rohfluidseite und Reinfluidseite möglich.

Gemäß einer vorteilhaften Ausgestaltung kann an der ersten Endscheibe eine erste Dichtung und an der zweiten Endscheibe eine zweite Dichtung zum bestimmungsgemäßen Abdichten zwischen einer Rohfluidseite und einer Reinfluidseite des Filtersystems und/oder der Umgebung vorgesehen sein. Das Filterelement lässt sich so im Filtergehäuse zuverlässig durch Vorsehen von radialen Dichtungen sowohl an der ersten Endscheibe als auch an der zweiten Endscheibe abdichten, so dass die Rohfluidseite zuverlässig von der Reinfluidseite des Filtersystems getrennt ist und kein Schmutz auf die Reinfluidseite gelangen kann. Beide Dichtungen können als O-Ringe ausgeführt sein.

Gemäß einer vorteilhaften Ausgestaltung kann die zweite Dichtung an dem Zentrierelement angeordnet sein. Vorteilhaft kann an dem mit der zweiten Endscheibe verbundenen Zentrierelement in radialer Richtung nach außen eine radiale Dichtung angeordnet sein, so dass mit dem Zentrieren des Filterelements über das Zentrierelement auch zugleich die Abdichtung auf der Seite der zweiten Endscheibe des Filterelements erfolgen kann.

Gemäß einer vorteilhaften Ausgestaltung kann das Zentralelement radial innerhalb der ersten und der zweiten Dichtung angeordnet sein. Eine solche Anordnung des Zentralelements ist besonders günstig, da das Zentralelement damit durchgehend auf der Reinfluidseite angeordnet ist, was für eine elektrische Kontaktierung der elektrischen Anschlusselemente, die im Zentralelement angeordnet sind, vorteilhaft ist, da so Verschmutzung der Kontakte vermieden werden kann.

Nach einem weiteren Aspekt betrifft die Erfindung ein Filtersystem zum Filtern eines Fluids, das ein Filtergehäuse aus einem Gehäuseoberteil und einem Gehäuseunterteil mit einer Gehäuseachse, einen am Gehäuseoberteil angeordneten Einlassstutzen zum Zuführen eines zu filternden Fluids, einen am Gehäuseoberteil angeordneten Auslassstutzen zur Ableitung des gefilterten Fluids sowie ein Filterelement umfasst, das eine Rohfluidseite von einer Reinfluidseite fluiddicht trennt. Dabei umfasst das Filterelement einen um eine Längsachse des Filterelements angeordneten Filterbalg, sowie ein im Inneren des Filterbalgs um die Längsachse relativ zum Filterbalg drehbar angeordnetes Zentralelement. Das Zentralelement weist ein oder mehrere Positionierungselemente auf, welche zum Zusammenwirken mit einem oder mehreren Positionierungsgegenelementen des Gehäuseoberteils vorgesehen sind, um das Zentralelement in dem Gehäuseoberteil in einer definierten Winkellage zu den ein oder mehreren Positionierungsgegenelementen zu fixieren.

Bei der Montage des Filterelements im Filtergehäuse wird das Filterelement in das Gehäuseunterteil, welches beispielsweise den Deckel des Filtergehäuses darstellt, eingebracht und dann das Gehäuseunterteil auf das Gehäuseoberteil aufgesetzt und mit diesem verschraubt. Der Filterbalg des Filterelements sitzt beim Einsetzen mit einer ersten an einer ersten Endscheibe des Filterbalgs radial außen umlaufenden Dichtung, beispielsweise einem O-Ring, in dem Gehäuseunterteil und ist durch das Reibmoment der Dichtung auf der Innenseite des Gehäuseunterteils gegen relatives Verdrehen des Filterbalgs gegen das Gehäuseunterteil gesichert. Das Gehäuseunterteil mit eingesetztem Filterelement wird auf das Gehäuseoberteil aufgesetzt und in der Gehäuseachse gegen das Gehäuseoberteil verdreht, um das Gehäuseunterteil in das Gehäuseoberteil einzuschrauben. Dabei dreht sich das relativ um die Längsachse des Filterelements drehbar gelagerte Zentralelement zunächst mit dem Filterbalg mit.

Um nun eine definierte Endposition des Filterelements zu dem Gehäuseoberteil sicherzustellen, sind an dem Zentralelement Positionierungselemente angebracht. Das Gehäuseoberteil weist dazu Positionierungsgegenelemente auf. Beim Drehen des Gehäuseunterteils mit dem eingesetzten Filterelement werden diese Positionierungselemente nach einigen Umdrehungen von den Positionierungsgegenelementen im Gehäuseoberteil "gefangen", so dass das Zentralelement stehen bleibt und relativ zum Gehäuseoberteil seine Winkelposition nicht mehr ändert. Da das Zentralelement drehbar im Filterelement gelagert ist, kann das Gehäuseunterteil mit dem eingesetzten Filterelement weiter eingeschraubt werden und die positionierte Ausrichtung des Zentralelements relativ zum Gehäuseoberteil bleibt fest bestehen, so dass eine elektrische Verbindung beispielsweise von WIF-Sensor im Zentralelement und Heizung im Gehäuseoberteil mittels Kontaktierungsstiften stattfinden kann.

Gemäß einer vorteilhaften Ausgestaltung kann das Gehäuseunterteil zum Verschließen des Filtergehäuses gegen das Gehäuseoberteil um die Gehäuseachse drehbar angeordnet sein. Ein Schraubgewinde zum Verschließen von Gehäuseunterteil und Gehäuseoberteil des Filtergehäuses stellt eine sehr zweckmäßige und kostengünstige Verbindungsart dar. Dadurch, dass das Gehäuseunterteil gegen das Gehäuseoberteil gedreht wird, bietet sich auf einfache Art die Möglichkeit, dass die im Gehäuseoberteil angeordneten Positionierungsgegenelemente bei der Drehung die am Filterelement angeordneten Positionierungselemente einfangen und festhalten. So ist eine definierte und zuverlässige Winkellage des Gehäuseoberteils zu dem Zentralelement gegeben. Damit wird eine einfache und zuverlässige elektrische Kontaktierung zwischen elektrischen Anschlusselementen im Gehäuseoberteil und elektrischen Anschlusselementen im Zentralelement ermöglicht.

Gemäß einer vorteilhaften Ausgestaltung können die ein oder mehreren Positionierungsgegenelemente als radiale Fangelemente ausgebildet sein, die insbesondere als einseitig offene Halbzylinder, Halbringe oder als Gegenrampenabschnitte ausgebildet sein können. Die Gegenrampenabschnitte können insbesondere auf einer inneren Mantelfläche eines Aufnahmebauteils des Gehäuseoberteils vorliegen, in das beispielsweise der Hülsenabschnitt des Zentralelements des Filterelements einführbar ist, Solche Fangelemente können bei einer Drehung des Gehäuseunterteils mit eingesetztem Filterelement gegen das Gehäuseoberteil auf einfache und zuverlässige Weise als Stifte ausgebildete Positionierungselemente des Zentralelements einfangen und in einer relativen Winkelposition festhalten. So bleibt eine feste Winkellage zwischen Gehäuseoberteil und Zentralelement bei einer weiteren Drehung des Gehäuseunterteils mit eingesetztem Filterelement erhalten. Alternativ können die radialen Fangelemente als Positionierungselemente auch am Zentralelement und damit am Filterelement angeordnet sein, während Stifte als Positionierungsgegenelemente am Gehäuseoberteil angeordnet sein können.

Gemäß einer vorteilhaften Ausgestaltung können bei einer Drehbewegung des Gehäuseunterteils gegen das Gehäuseoberteil um die Gehäuseachse bei in das Gehäuseunterteil eingesetztem Filterelement die ein oder mehreren Positionierungselemente von den ein oder mehreren Positionierungsgegenelementen eingefangen und festgehalten werden, da das Zentralelement relativ zu dem Filterbalg und damit Filterelement drehbar gelagert ist. Damit bleibt eine feste Winkellage zwischen Gehäuseoberteil und Zentralelement bei einer weiteren Drehung des Gehäuseunterteils mit Filterelement relativ zu dem Gehäuseoberteil erhalten, wodurch eine sichere und zuverlässige elektrische Kontaktierung zwischen Gehäuseoberteil und Zentralelement ermöglicht wird.

Gemäß einer vorteilhaften Ausgestaltung kann das Gehäuseoberteil wenigstens ein gehäuseseitiges elektrisches Anschlusselement aufweisen, welches bei einem Verschließen des Filtergehäuses mit wenigstens einem am Filterelement angeordneten elementseitigen elektrischen Anschlusselement fluiddicht verbindbar ist. Das elementseitige elektrische Anschlusselement kann dabei zur elektrischen Kontaktierung zwischen einem im Zentralelement angeordneten WIF-Sensor und einer Heizungsplatine, die im Gehäuseoberteil angeordnet ist und über das gehäuseseitige elektrische Anschlusselement kontaktiert werden kann, dienen.

Gemäß einer vorteilhaften Ausgestaltung kann das wenigstens eine gehäuseseitige elektrische Anschlusselement in das wenigstens eine elementseitige elektrische Anschlusselement einsteckbar sein. Das gehäuseseitige Anschlusselement kann zweckmäßigerweise Steckerstifte aufweisen, welche in eine im Zentralelement angeordnete Öffnung mit Buchse des elementseitigen Anschlusselements gesteckt werden können, um so eine zuverlässige elektrische Kontaktierung zu erhalten. Auch ist das elementseitige Anschlusselement auf diese Weise geschützt, da die eigentliche elektrische Anschlussbuchse im Kunststoffkörper des Zentralelements untergebracht werden kann.

Gemäß einer vorteilhaften Ausgestaltung kann das Gehäuseoberteil eine innenliegende Aufnahme zum Abdichten zwischen der Rohfluidseite und der Reinfluidseite und/oder zum radialen Zentrieren des Filterelements im Filtergehäuse bei einem bestimmungsgemäßen Zusammenwirken mit einem Zentrierelement des Filterelements vorsehen. Die innenliegende Aufnahme kann vorteilhaft als Gegenelement für das auf der zweiten Endscheibe des Filterelements angeordnete Zentrierelement dienen und dieses beispielsweise umgreifen. Diese Aufnahme kann auch als Dichtungsfläche beim Anlegen einer am Zentrierelement angeordneten radialen Dichtung des Filterelements dienen und so eine zuverlässige Abdichtung zwischen Rohfluidseite und Reinfluidseite gewährleisten.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: ein Filterelement mit Positionierungselementen nach einem Ausführungsbeispiel der Erfindung in isometrischer Darstellung;
- Fig. 2: eine Schnittdarstellung des Filterelements nach Fig. 1;
- Fig. 3: das in ein Gehäuseunterteil eingesetzte Filterelement aus Fig. 1 in isometrischer Darstellung;
- Fig. 4: eine Untersicht eines Gehäuseoberteils eines Filtersystems nach einem Ausführungsbeispiel der Erfindung;
- Fig. 5: eine Schnittdarstellung eines Filtersystems nach einem Ausführungsbeispiel der Erfindung mit eingesetztem Filterelement;
- Fig.6: ein Filterelement mit Positionierungselementen nach einem weiteren Ausführungsbeispiel der Erfindung in isometrischer Darstellung und
- Fig. 7: eine Untersicht eines Gehäuseoberteils eines Filtersystems nach einem weiteren Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

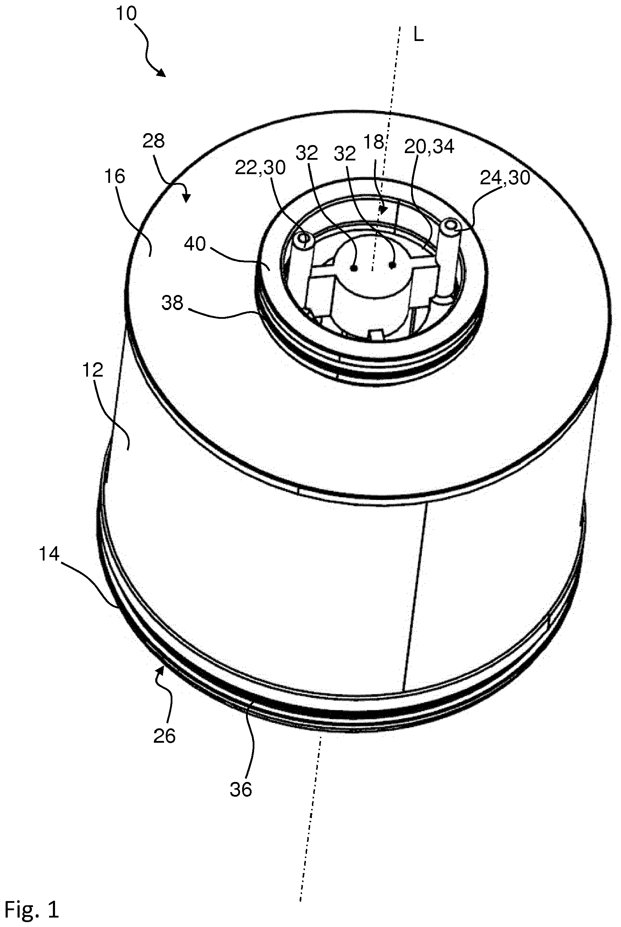

Fig. 1 zeigt ein Filterelement 10 mit Positionierungselementen 22, 24 nach einem Ausführungsbeispiel der Erfindung in isometrischer Darstellung. Das Filterelement 10 umfasst einen um eine Längsachse L angeordneten Filterbalg 12 mit einer ersten Endscheibe 14 an einer ersten Stirnseite 26 und einer zweiten Endscheibe 16 an einer zweiten Stirnseite 28, so dass der Filterbalg 12 durch die beiden Endscheiben 14, 16 abgeschlossen ist. Weiter umfasst das Filterelement 10 ein im Inneren 18 des Filterbalgs 12 um die Längsachse L relativ zum Filterbalg 12 drehbar angeordnetes Zentralelement 20. Das Zentralelement 20 weist zwei Positionierungselemente 22, 24 auf, welche bei bestimmungsgemäßer Montage zum Zusammenwirken mit zwei oder mehreren Positionierungsgegenelementen 116, 118 eines Gehäuseoberteils 114 eines Filtergehäuses 110 eines Filtersystems 100 vorgesehen sind, um das Zentralelement 20 in dem Gehäuseoberteil 114 in einer definierten Winkellage zu den ein oder mehreren Positionierungsgegenelementen 116, 118 zu fixieren. Die zwei Positionierungselemente 22, 24 sind als parallel zu der Längsachse L ausgerichtete Stifte 30 ausgebildet, wobei die Stifte 30 wie auch das Zentralelement 20 aus Kunststoff ausgeführt sind. Das Zentralelement 20 weist zwei elementseitige elektrische Anschlusselemente 32 auf, die bei bestimmungsgemäßer Montage in dem Filtergehäuse 110 zur Kontaktierung von gehäuseseitigen elektrischen Anschlusselementen 120 vorgesehen sind. Die zweite Endscheibe 16 weist ein Zentrierelement 40 auf, das zu einem radialen Zentrieren des Filterelements bei einer bestimmungsgemäßen Montage in dem Filtergehäuse 110 vorgesehen ist und das als aus der zweiten Endscheibe 16 axial hervorstehender Bund ausgebildet ist. An der ersten Endscheibe 14 ist eine erste Dichtung 36 und an der zweiten Endscheibe 16 eine zweite Dichtung 38 zum bestimmungsgemäßen Abdichten zwischen einer Rohfluidseite 50 und einer Reinfluidseite 52 des Filtersystems 100 und/oder der Umgebung vorgesehen. Beide Dichtungen können als O-Ringe ausgebildet sein. Die zweite Dichtung 38 ist als radiale Dichtung an der radialen Außenseite des als Bund ausgebildeten Zentrierelements 40 angebracht. Das Zentralelement 20 ist radial innerhalb der ersten und der zweiten Dichtung 36, 38 angeordnet, um so auf der Reinfluidseite des Filtersystems angeordnet zu sein.

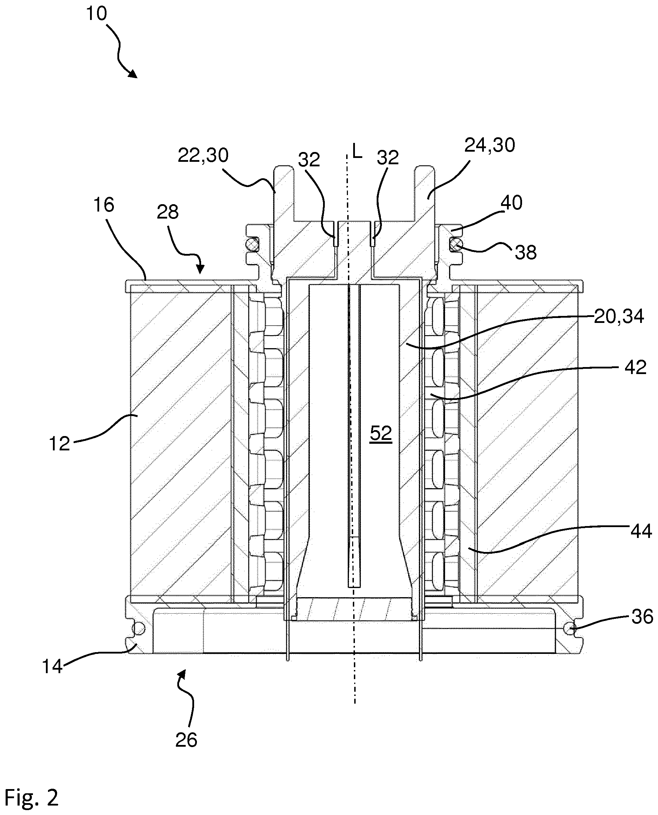

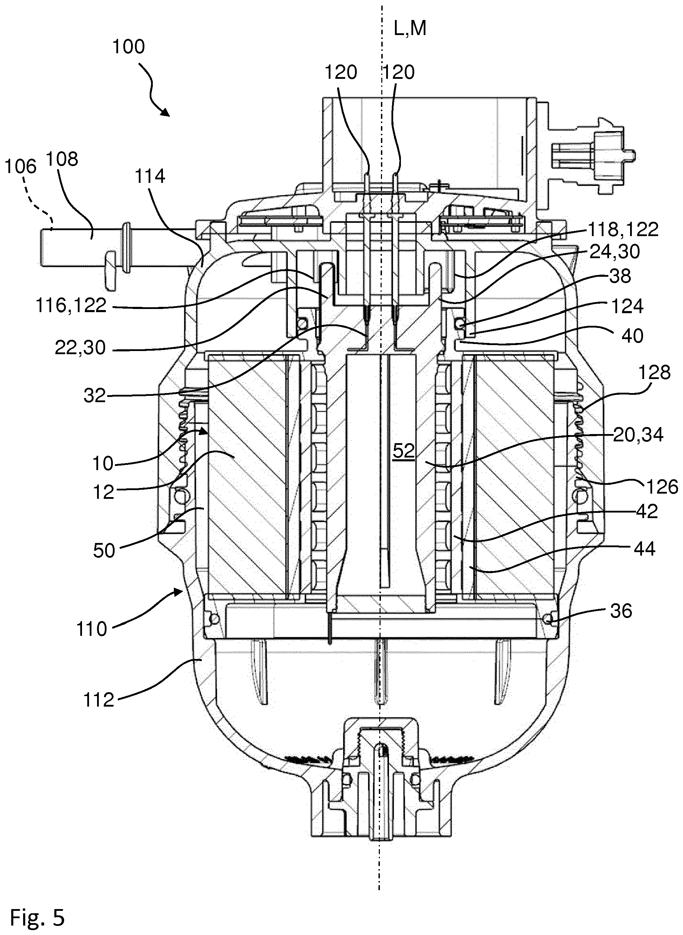

Fig. 2 zeigt dazu eine Schnittdarstellung des Filterelements 10 aus Fig. 1. Im Schnitt ist der generelle Aufbau des Filterelements 10 zu erkennen. Die radiale Innenseite des Filterbalgs 12 wird von dem Mittelrohr 42 radial gegen Druck von der radialen Außenseite des Filterbalgs 12, beispielsweise Fluiddruck durch das strömende Fluid, abgestützt. Das Mittelrohr 42 selbst ist auf der radialen Außenseite, also zwischen Filterbalg 12 und Mittelrohr 42 von einem Koaleszenzmedium 44 umgeben, welches zur Koagulation von kleineren Wassertröpfchen im zu filternden Fluid, also beispielsweise Kraftstoff, zu größeren Wassertröpfchen dient. Die größeren Wassertröpfchen können dann an dem als Siebfilter 34 ausgebildeten Zentralelement 20 abgeschieden werden. Innerhalb des Mittelrohrs 42, auf der Reinfluidseite 52 des Filterelements 10, ist das Zentralelement 20 um die Längsachse L drehbar gelagert angeordnet. Das Zentralelement 20 weist an dem in Fig. 2 oberen Ende die Positionierungselemente 22, 24 als Stifte 30 zur Positionierung des Zentralelements 20 in einem Gehäuseoberteil 114 (in Fig. 5 dargestellt) auf. Im Zentralelement 20 sind auch die elektrischen Anschlusselemente 32 angeordnet, an welche elektrische Gegenelemente in Form von Steckverbindungen anschließbar sind. Der Filterbalg 12 ist mit der ersten Endscheibe 14 an der ersten Stirnseite 26 und der zweiten Endscheibe 16 an der zweiten Stirnseite 28 abgeschlossen. Die zweite Endscheibe 16 weist das Zentrierelement 40 zum genauen Zentrieren in einem Gehäuseoberteil auf, wobei in dem Zentrierelement 40 die radiale Dichtung 38 und in der ersten Endscheibe 14 die radiale Dichtung 36 zum Abdichten der Rohfluidseite 50 gegen die Reinfluidseite 52 des Filtersystems 100 (in Fig. 5 dargestellt) angeordnet sind.

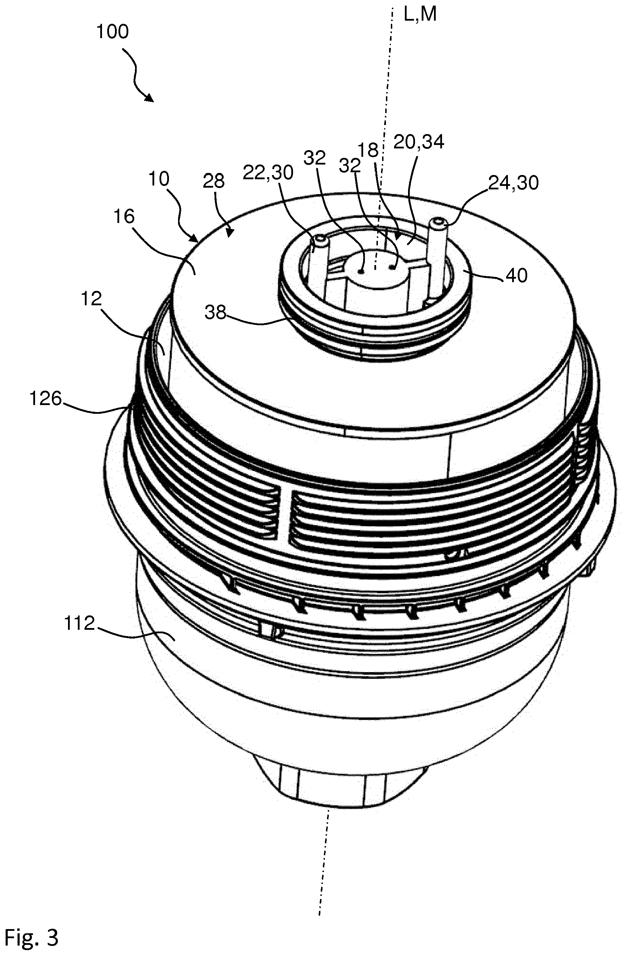

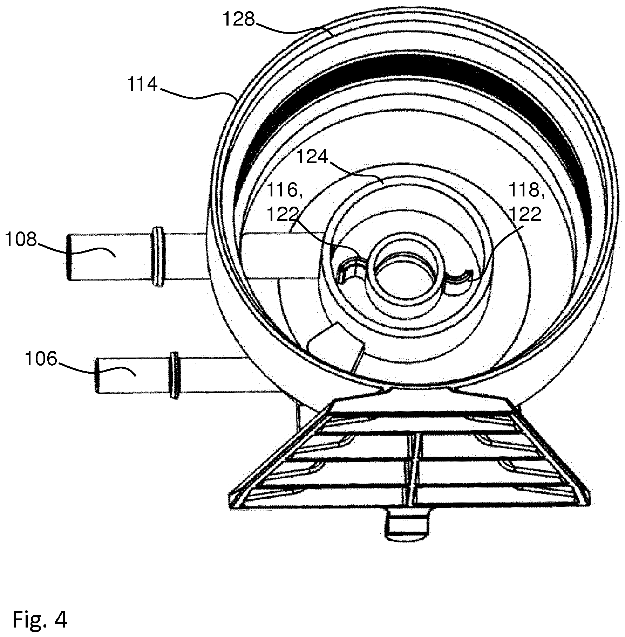

Fig. 3 zeigt das in ein Gehäuseunterteil 112 eingesetzte Filterelement 10 aus Fig. 1 in isometrischer Darstellung. Das Gehäuseunterteil 112 ist als hohlzylinderförmiger Topf ausgebildet und weist an einem oberen Rand ein Schraubgewinde 126 zum Verschließen des Filtergehäuses mit einem Gehäuseoberteil 114 (siehe Fig. 4) auf.

In Fig. 4 ist eine Untersicht eines Gehäuseoberteils 114 eines Filtersystems 100 nach einem Ausführungsbeispiel der Erfindung dargestellt. Das Gehäuseoberteil 114 ist ebenfalls als hohlzylinderförmiger Topf ausgebildet und weist an seinem unteren inneren Rand ein Gegengewinde 128 zum Verschließen des Filtergehäuses 110 mit dem in Fig. 3 dargestellten Gehäuseunterteil 112 auf. Im Inneren des Gehäuseoberteils 114 sind zentral die Aufnahme 124 in Form eines radialen Stutzens als Gegenelement für das Zentrierelement 40 des Filterelements 10 sowie zwei Positionierungsgegenelemente 116, 118 angeordnet, die als radiale Fangelemente 122 als einseitig offene Halbzylinder ausgebildet sind. Am oberen Rand des Gehäuseoberteils 114 sind ein radial anschließender Einlassstutzen 106 sowie ein zentral herausgeführter Auslassstutzen 108 angeordnet.

Fig. 5 zeigt eine Schnittdarstellung eines Filtersystems 100 nach einem Ausführungsbeispiel der Erfindung mit eingesetztem Filterelement 10. Das Filtersystem 100 umfasst das Filtergehäuse 110 aus dem Gehäuseoberteil 114 und dem Gehäuseunterteil 112, den am Gehäuseoberteil 110 angeordneten Einlassstutzen 106 zum Zuführen eines zu filternden Fluids, wie beispielsweise Kraftstoff, den am Gehäuseoberteil 110 angeordneten Auslassstutzen 108 zur Ableitung des gefilterten Fluids sowie das Filterelement 10, das eine Rohfluidseite 50 von einer Reinfluidseite 52 fluiddicht trennt. Dabei umfasst das Filterelement 10 den um die Längsachse L des Filterelements 10 angeordneten Filterbalg 12 sowie das im Inneren 18 des Filterbalgs 12 um die Längsachse L relativ zum Filterbalg 12 drehbar angeordnete Zentralelement 20. Das Zentralelement 20 weist zwei Positionierungselemente 22, 24 auf, welche zum Zusammenwirken mit zwei Positionierungsgegenelementen 116, 118 des Gehäuseoberteils 114 vorgesehen sind, um das Zentralelement 20 in einer definierten Winkellage zu den zwei Positionierungsgegenelementen 116, 118 in dem Gehäuseoberteil 114 zu fixieren. Das Filtersystem 100 weist eine Gehäuseachse M auf, zu der die Längsachse L des Filterelements 10 bei im Filtergehäuse montiertem Filterelement 10 parallel liegt. Die am Zentralelement 20 angeordneten Positionierungselemente 22, 24 sind als Stifte 30 ausgeführt, die in die radialen Fangelemente 122 des Gehäuseoberteils 114, die als einseitig offene Halbzylinder oder Halbringe ausgebildet sind, eingreifen und beim Drehen des Gehäuseunterteils 112 gegen das Gehäuseoberteil 114 um die Gehäuseachse M relativ zu dem Filterelement 10 bei in das Gehäuseunterteil 112 eingesetztem Filterelement 10 von den radialen Fangelementen 122 gefangen werden.

Im Inneren 18 des Filterbalgs 12 ist das Mittelrohr 42 angeordnet, welches das Zentralelement 20 radial umgibt, wobei das Mittelrohr 20 auf einer radialen Außenseite das flächig angeordnete Koaleszenzmedium 44 aufweist. Das Mittelrohr 42 oder Stützrohr ist zweckmäßigerweise im Inneren 18 des Filterbalgs 12 angeordnet, um den Filterbalg 12, der aus einem mechanisch weniger festen Material bestehen kann, mechanisch zu stabilisieren oder abzustützen. Diese Stützfunktion ist besonders vorteilhaft, um den Filterbalg 12 gegen den Fluiddruck des strömenden Fluids, beispielsweise Kraftstoff, abzustützen. Das in dem Ausführungsbeispiel in Fig. 4 dargestellte Filterelement 10 ist zur Wasserabscheidung vorgesehen, deshalb ist das Mittelrohr 42 mit dem Koaleszenzmedium 44 umwickelt. Auf diese Weise können kleine im Kraftstoff emulgierte Wassertröpfchen in dem Koaleszenzmedium 44 zu größeren Wassertröpfchen koaguliert werden, um danach beispielsweise in dem als Siebfilter ausgebildeten Zentralelement 20 abzutropfen und so aus dem Kraftstoff herausgefiltert zu werden.

Das Gehäuseunterteil 112 ist zum Verschließen des Filtergehäuses 110 gegen das Gehäuseoberteil 114 um die Gehäuseachse M drehbar angeordnet und kann durch Ineinandergreifen des Schraubgewindes 126 des Gehäuseunterteils 112 und des Schraubgegengewindes 128 fluiddicht verschlossen werden.

Bei der Montage des Filterelements 10 im Filtergehäuse 110 wird das Filterelement 10 in das Gehäuseunterteil 112, welches beispielsweise den Deckel des Filtergehäuses 110 darstellt, eingebracht und dann das Gehäuseunterteil 112 auf das Gehäuseoberteil 114 aufgesetzt und mit diesem verschraubt. Der Filterbalg 12 des Filterelements 10 sitzt beim Einsetzen mit der ersten an der ersten Endscheibe 14 des Filterbalgs 12 radial außen umlaufenden Dichtung 36, beispielsweise einem O-Ring, in dem Gehäuseunterteil 112 und ist durch das Reibmoment der Dichtung 36 auf der Innenseite des Gehäuseunterteils 112 gegen relatives Verdrehen des Filterbalgs 12 gegen das Gehäuseunterteil 112 gesichert. Das Gehäuseunterteil 112 mit eingesetztem Filterelement 10 wird auf das Gehäuseoberteil 114 aufgesetzt und in der Gehäuseachse M gegen das Gehäuseoberteil 114 verdreht, um das Gehäuseunterteil 112 in das Gehäuseoberteil 114 einzuschrauben. Dabei dreht sich das relativ um die Längsachse L des Filterelements 10 drehbar gelagerte Zentralelement 20 zunächst mit dem Filterbalg 12 mit.

Um nun eine definierte Endposition des Filterelements 10 zu dem Gehäuseoberteil 114 sicherzustellen, sind an dem Zentralelement 20 Positionierungselemente 22, 24 angebracht. Das Gehäuseoberteil 114 weist dazu Positionierungsgegenelemente 116, 118 auf. Beim Drehen des Gehäuseunterteils 112 mit dem eingesetzten Filterelement 10 werden diese Positionierungselemente 22, 24 nach einigen Umdrehungen von den Positionierungsgegenelementen 116, 118 im Gehäuseoberteil 114 "gefangen", so dass das Zentralelement 20 stehen bleibt und relativ zum Gehäuseoberteil 114 seine Winkelposition nicht mehr ändert. Da das Zentralelement 20 drehbar im Filterelement 10 gelagert ist, kann das Gehäuseunterteil 112 mit dem eingesetzten Filterelement 10 weiter eingeschraubt werden und die positionierte Ausrichtung des Zentralelements 20 relativ zum Gehäuseoberteil 114 bleibt fest bestehen, so dass eine elektrische Verbindung beispielsweise von WIF-Sensor im Zentralelement 20 und Heizung im Gehäuseoberteil 114 mittels Kontaktierungsstiften stattfinden kann.

Das Gehäuseoberteil 114 sieht die innenliegende Aufnahme 124 zum Abdichten zwischen der Rohfluidseite 50 und der Reinfluidseite 52 und zum radialen Zentrieren des Filterelements 10 im Filtergehäuse 110 bei einem bestimmungsgemäßen Zusammenwirken mit einem Zentrierelement 40 des Filterelements 10 vor. Das Gehäuseoberteil 114 weist weiter zwei gehäuseseitige elektrische Anschlusselemente 120 auf, welche bei einem Verschließen des Filtergehäuses 110 mit zwei am Filterelement 10 angeordneten elementseitigen elektrischen Anschlusselementen 120 fluiddicht verbindbar sind. Dazu wird das gehäuseseitige elektrische Anschlusselement 120 in das elementseitige elektrische Anschlusselement 32 eingesteckt.

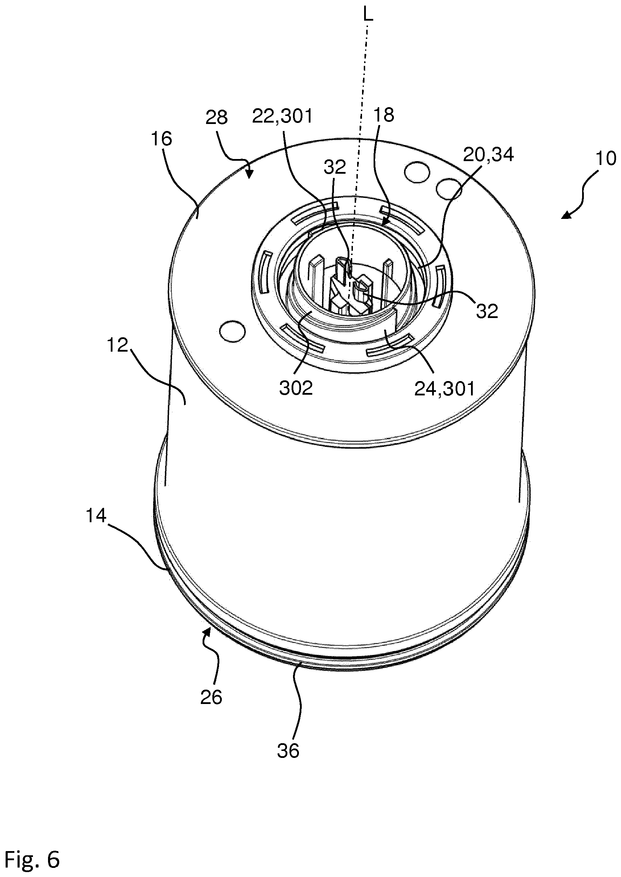

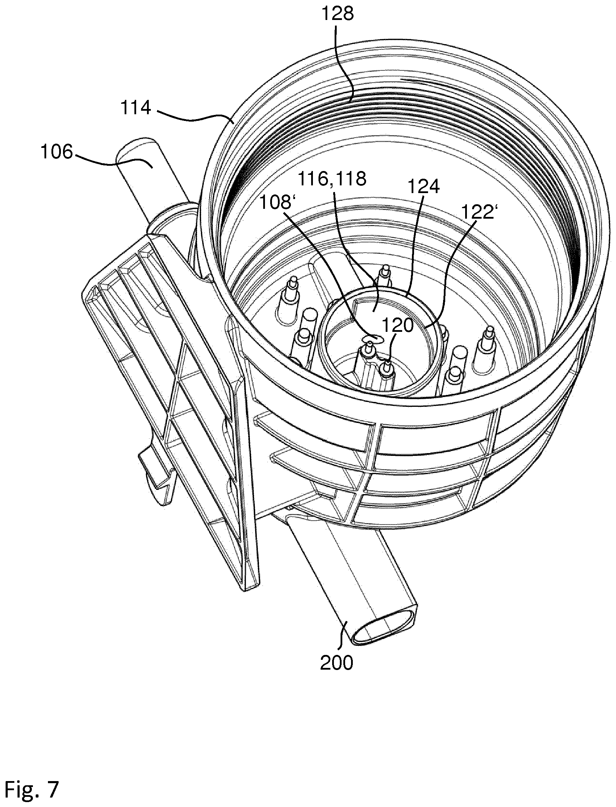

In Fig. 6 ist eine weitere erfindungsgemäße Ausführungsform des Filterelements 10 gezeigt. Diese verfügt als Positionierungselemente 22,24 über umfänglich verlaufende Rampenabschnitte 301, die auf der äußeren Mantelfläche eines Hülsenbauteils 302, das Bestandteil des Zentralelements 18 ist, vorliegen. Bei dem Hülsenbauteil 302, den Rampenabschnitten 301 und dem Zentralelement 20 handelt es sich um ein integrales Bauteil, das insbesondere durch ein Spritzgießverfahren, bevorzugt aus Kunststoff, hergestellt werden kann. Innerhalb des Hülsenbauteils 302 mit den Rampenabschnitten 301 befinden sich zwei elektrische Anschlusselemente 32, die hier als Kontaktzungen ausgebildet sind und die mit korrespondierenden Kontaktstiften 120 eines Gehäuseoberteils 114 (siehe Fig. 7) in leitenden Kontakt bringbar sind. Das Hülsenbauteil 302 und das axial obere Ende der Rampenabschnitte 301 überragen die elektrischen Anschlusselemente 32 in axialer Richtung, so dass diese vor Beschädigungen geschützt sind, was insbesondere im Servicefall vorteilhaft ist, falls das Filterelement 10 aus Unachtsamkeit herunter fällt.

Das zu dem Filterelement 10 der Fig. 6 passende Gehäuseoberteil 114 ist in Fig. 7 dargestellt. Dieses entspricht im Wesentlichen funktionell dem Gehäuseoberteil 114 aus Fig. 4; Unterschiede bestehen hinsichtlich der Ausgestaltung der Positionierungsgegenelemente 116,118 und der elektrischen Anschlusselemente 120. Bei den Positionierungsgegenelementen 116,118 handelt es sich um Gegenrampenabschnitte 122', die hinsichtlich Abmessungen und Steigung mit den Rampenabschnitten 301 des Filterelements 10 korrespondieren. Beim Einschrauben des Filterelements 10 mit Hilfe des Gewindes 128 werden ab einer bestimmten Montagetiefe die Rampenabschnitte 301 des Filterelements 10 mit ihren stumpfen Enden an den stumpfen Enden der Gegenrampenabschnitte 122' des Gehäuseoberteils 114 zum Anschlag kommen, woraufhin die Drehbewegung des drehbar in dem Filterelement 10 gelagerten Zentralelements 18 gestoppt wird und die Kontaktzungen 32 des Filterelements 10 passend zu den Kontaktstiften 120 des Gehäuseoberteils 114 ausgerichtet sind. Bei einer weiteren Einschraubbewegung des Filterelements 10 werden die Kontaktzungen 32 dann axial über die Kontaktstifte 120 geschoben und ein elektrisch leitender Kontakt hergestellt.

Ferner ist in der gezeigten Darstellung der Fluideinlassstutzen 106 zu erkennen, der Fluidauslassstutzen ist verdeckt, jedoch erkennt man auf der inneren Mantelfläche des Aufnahmeabschnitts, auf der auch die Gegenrampenabschnitte 122' vorliegen, eine Fluidaustrittsbohrung 108', die zu den Auslassstutzen führt. Pos. 200 ist ein elektrischer Anschluss, der über zwei Pins verfügt, die ihrerseits elektrisch mit den Kontaktstiften 120 verbunden sind.

## Patentansprüche

1. Filterelement (10) zum Filtern eines Fluids mit einer Längsachse (L), umfassend einen um die Längsachse (L) angeordneten Filterbalg (12) mit einer ersten Endscheibe (14) an einer ersten Stirnseite (26) und einer zweiten Endscheibe (16) an einer zweiten Stirnseite (28), **dadurch gekennzeichnet, dass** das Filterelement ein im Inneren (18) des Filterbalgs (12) um die Längsachse (L) relativ zum Filterbalg (12) drehbar angeordnetes Zentralelement (20) umfasst, wobei das Zentralelement (20) ein oder mehrere Positionierungselemente (22, 24) aufweist, welche bei bestimmungsgemäßer Montage zum Zusammenwirken mit einem oder mehreren Positionierungsgegenelementen (116, 118) eines Gehäuseoberteils (114) eines Filtergehäuses (110) eines Filtersystems (110) vorgesehen sind, um das Zentralelement (20) in dem Gehäuseoberteil (114) in einer definierten Winkellage zu den ein oder mehreren Positionierungsgegenelementen (116, 118) zu fixieren, wobei das Zentralelement (20) wenigstens ein elementseitiges elektrisches Anschlusselement (32) aufweist, das bei bestimmungsgemäßer Montage in dem Filtergehäuse (110) zur elektrischen Kontaktierung wenigstens eines gehäuseseitigen elektrischen Anschlusselements (120) vorgesehen ist.

2. Filterelement nach Anspruch 1, wobei die ein oder mehreren Positionierungselemente (22, 24) als parallel zu der Längsachse (L) ausgerichtete Stifte (30) ausgebildet sind, die bevorzugt axial über die Endscheibe (16) überstehen.

3. Filterelement nach Anspruch 1, wobei die Positionierungselemente (22, 24) als umfänglich auf zumindest einem Radius verlaufende Rampenabschnitte (301) ausgebildet sind.

4. Filterelement nach Anspruch 3, wobei auf dem zumindest einen Radius zwei oder mehr Rampenabschnitte (301) umfänglich verteilt vorliegen.

5. Filterelement nach Anspruch 3 oder 4, wobei die als Rampenabschnitte (301) ausgebildeten Positionierungselemente (22, 24) das wenigstens eine elementseitige elektrische Anschlusselement (32) in Längsrichtung (L) überragen und/oder radial umgeben.

6. Filterelement nach zumindest einem der Ansprüche 3 bis 5, wobei das Zentralelement (20) einen Hülsenabschnitt (302) aufweist, der das wenigstens eine elementseitige elektrische Anschlusselement (32) umgibt und auf dessen Mantelfläche bevorzugt die Rampenabschnitte (301) vorliegen.

7. Filterelement nach einem der vorhergehenden Ansprüche, wobei das Zentralelement (20) als Siebfilter (34) ausgebildet ist.

8. Filterelement nach einem der vorhergehenden Ansprüche, wobei im Inneren (18) des Filterbalgs (12) ein Mittelrohr (42) angeordnet ist, welches das Zentralelement (20) radial umgibt, wobei das Mittelrohr (42) auf einer radialen Außenseite oder radialen Innenseite ein flächig angeordnetes Koaleszenzmedium (44) aufweist.

9. Filterelement nach einem der vorhergehenden Ansprüche, wobei die zweite Endscheibe (16) ein Zentrierelement (40) aufweist, das zu einem radialen Zentrieren des Filterelements bei einer bestimmungsgemäßen Montage in dem Filtergehäuse (110) vorgesehen ist.

10. Filterelement nach einem der vorhergehenden Ansprüche, wobei an der ersten Endscheibe (14) eine erste Dichtung (36) und an der zweiten Endscheibe (16) eine zweite Dichtung (38) zum bestimmungsgemäßen Abdichten zwischen einer Rohfluidseite (50) und einer Reinfluidseite (52) des Filtersystems (100) und/oder der Umgebung vorgesehen sind.

11. Filterelement nach Anspruch 10, wobei die zweite Dichtung (38) an dem Zentrierelement (40) angeordnet ist.

12. Filterelement nach Anspruch 10 oder 11, wobei das Zentralelement (20) radial innerhalb der ersten und der zweiten Dichtung (36, 38) angeordnet ist.

13. Filtersystem (100) zum Filtern eines Fluids, umfassend
- ein Filtergehäuse (110) aus einem Gehäuseoberteil (114) und einem Gehäuseunterteil (112) mit einer Gehäuseachse (M),
- einen am Gehäuseoberteil (110) angeordneten Einlassstutzen (106) zum Zuführen eines zu filternden Fluids,
- einen am Gehäuseoberteil (110) angeordneten Auslassstutzen (108) zur Ableitung des gefilterten Fluids,
- ein Filterelement (10) nach einem der vorhergehenden Ansprüche, das eine Rohfluidseite (50) von einer Reinfluidseite (52) fluiddicht trennt,
wobei das Filterelement (10) einen um eine Längsachse (L) des Filterelements (10) angeordneten Filterbalg (12) sowie ein im Inneren (18) des Filterbalgs (12) um die Längsachse (L) relativ zum Filterbalg (12) drehbar angeordnetes Zentralelement (20) umfasst, wobei das Zentralelement (20) ein oder mehrere Positionierungselemente (22, 24) aufweist, welche zum Zusammenwirken mit einem oder mehreren Positionierungsgegenelementen (116, 118) des Gehäuseoberteils (114) vorgesehen sind, um das Zentralelement (20) in dem Gehäuseoberteil (114) in einer definierten Winkellage zu den ein oder mehreren Positionierungsgegenelementen (116, 118) zu fixieren.

14. Filtersystem nach Anspruch 13, wobei das Gehäuseoberteil (114) zum Verschließen des Filtergehäuses (110) gegen das Gehäuseunterteil (112) um die Gehäuseachse (M) drehbar angeordnet ist.

15. Filtersystem nach Anspruch 13 oder 14, wobei die ein oder mehreren Positionierungsgegenelemente (116, 118) als radiale Fangelemente (122,122') ausgebildet sind, die insbesondere als einseitig offene Halbzylinder, Halbringe oder als Gegenrampenabschnitte (122') ausgebildet sind.

16. Filtersystem nach Anspruch 14 oder 15, wobei bei einer Drehbewegung des Gehäuseoberteils (114) gegen das Gehäuseunterteil (112) um die Gehäuseachse (M) bei in das Gehäuseunterteil (112) eingesetztem Filterelement (10) die ein oder mehreren Positionierungselemente (22, 24) von den ein oder mehreren Positionierungsgegenelementen (116, 118) mitführbar sind.

17. Filtersystem nach Anspruch 13 bis 16, wobei das Gehäuseoberteil (114) wenigstens ein gehäuseseitiges elektrisches Anschlusselement (120) aufweist, welches bei einem Verschließen des Filtergehäuses (110) mit wenigstens einem am Filterelement (10) angeordneten elementseitigen elektrischen Anschlusselement (120) fluiddicht verbindbar ist.

18. Filtersystem nach Anspruch 17, wobei das wenigstens eine gehäuseseitige elektrische Anschlusselement (120) in das wenigstens eine elementseitige elektrische Anschlusselement (32) einsteckbar ist.

19. Filtersystem nach Anspruch 13 bis 18, wobei das Gehäuseoberteil (114) eine innenliegende Aufnahme (124) zum Abdichten zwischen der Rohfluidseite (50) und der Reinfluidseite (52) und/oder zum radialen Zentrieren des Filterelements (10) im Filtergehäuse (110) bei einem bestimmungsgemäßen Zusammenwirken mit einem Zentrierelement (40) des Filterelements (10) vorsieht.

## Claims

1. Filter element (10) for filtering a fluid with a longitudinal axis (L), comprising a filter bellows (12) disposed around the longitudinal axis (L) with a first end disk (14) on a first front side (26) and a second end disk (16) on a second front side (28), **characterized in that** the filter element comprises a central element (20) rotatably disposed in the inside (18) of the filter bellows (12) around the longitudinal axis (L) relative to the filter bellows (12),
wherein the central element (20) features one or more positioning elements (22, 24) which are provided in the case of intended assembly for interacting with one or more positioning counter elements (116, 118) of a housing upper part (114) of a filter housing (110) of a filter system (110) in order to fix the central element (20) in the housing upper part (114) in a defined angular position relative to the one or several positioning counter elements (116, 118), wherein the central element (20) features at least one element-sided electrical connecting element (32) which is provided in the case of intended assembly in the filter housing (110) for electrically contacting at least one housing-sided electrical connecting element (120).

2. Filter element according to claim 1, wherein the one or several positioning elements (22, 24) are designed as pins (30) oriented parallel relative to the longitudinal axis (L) which preferably protrude axially beyond the end disk (16).

3. Filter element according to claim 1, wherein the positioning elements (22, 24) are designed as circumferentially extending ramp sections (301) on at least one radius.

4. Filter element according to claim 3, wherein on the at least one radius two or more ramp sections (301) are circumferentially distributed.

5. Filter element according to claim 3 or 4, wherein the positioning elements (22, 24) designed as ramp sections (301) protrude and/or radially surround the at least one element-sided electrical connecting element (32) in longitudinal direction.

6. Filter element according to at least one of the claims 3 to 5, wherein the central element (20) features a bushing section (302) which surrounds the at least one element-sided electrical connecting element (32) and on the circumferential surface of which are preferably disposed the ramp sections (301).

7. Filter element according to one of the above claims, wherein the central element (20) is designed as screen filter (34).

8. Filter element according to one of the above claims, wherein in the interior (18) of the filter bellows (12) is disposed a central tube (42) which surrounds the central element (20) radially, wherein the central tube (42) features on a radial exterior side or radial interior side a coalescence medium (44) in a planar manner.

9. Filter element according to one of the above claims, wherein the second end disk (16) features a centering element (40) which is provided for radially centering the filter element in case of an intended assembly in the filter housing (110).

10. Filter element according to one of the above claims, wherein at the first end disk (14) a first gasket (36) and at the second end disk (16) a second gasket (38) are provided for an intended sealing between a raw fluid side (50) and a clean fluid side (52) of the filter system (100) and/or the surroundings.

11. Filter element according to claim 10, wherein the second gasket (38) is disposed at the centering element (40).

12. Filter element according to claim 10 or 11, wherein the central element (20) is disposed radially inside of the first and the second gasket (36, 38).

13. Filter system (100) for filtering a fluid, comprising
- a filter housing (110) made of a housing upper part (114) and a housing lower part (112) with a housing axis (M),
- an intake port (106) disposed at the housing upper part (110) for supplying a fluid to be filtered,
- an outlet port (108) disposed at the housing upper part (110) for discharging the filtered fluid,
- a filter element (10) according to one of the above claims which separates a raw fluid side (50) fluid-tightly from a clean fluid side (52),
wherein the filter element (10) comprises a filter bellows (12) disposed around a longitudinal axis (L) of the filter element (10) as well as a central element (20) rotatably disposed in the interior (18) of the filter bellows (12) around the longitudinal axis (L) relative to the filter bellows (12), wherein the central element (20) features one or more positioning elements (22, 24) which are provided for interacting with one or more positioning counter elements (116, 118) of the housing upper part (114) in order to fix the central element (20) in the housing upper part (114) in a defined angular position relative to the one or several positioning counter elements (116, 118).

14. Filter system according to claim 13, wherein the housing upper part (114) is rotatably disposed around the housing axis (M) for closing the filter housing (110) against the housing lower part (112).

15. Filter system according to claim 13 or 14, wherein the one or more positioning counter elements (116, 118) are designed as radial catch elements (122, 122') which are designed in particular as semicylinders, half-rings open on one side or as counter ramp sections (122').

16. Filter system according to claim 14 or 15, wherein during a rotational motion of the housing upper part (114) against the housing lower part (112) around the housing axis (M), if the filter element (10) is inserted into the housing lower part (112), the one or more positioning elements (22, 24) can be carried along by the one or more positioning counter elements (116, 118).

17. Filter system according to claim 13 to 16, wherein the housing upper part (114) features at least one housing-sided electrical connecting element (120) which can be connected fluid-tightly to at least one element-sided electrical connecting element (120) disposed at the filter element (10) if the filter housing (110) is closed.

18. Filter system according to claim 17, wherein the at least one housing-sided electrical connecting element (120) can be inserted into the at least one element-sided electrical connecting element (32).

19. Filter system according to claim 13 to 18, wherein the housing upper part (114) provides an internal holding fixture (124) for sealing between the raw fluid side (50) and the clean fluid side (52) and/or for radially centering the filter element (10) in the filter housing (110) during an intended interaction with a centering element (40) of the filter element (10).

## Revendications

1. Élément filtrant (10) destiné au filtrage d'un fluide, avec un axe longitudinal (L), comprenant un soufflet de filtre (12) disposé autour de l'axe longitudinal (L) et doté d'un premier disque d'extrémité (14) sur une première face frontale (26) et d'un deuxième disque d'extrémité (16) sur une deuxième face frontale (28), **caractérisé en ce que** l'élément filtrant comprend un élément central (20) monté de manière rotative par rapport au soufflet de filtre (12), à l'intérieur (18) du soufflet de filtre (12), autour de l'axe longitudinal (L),
l'élément central (20) comportant un ou plusieurs éléments de positionnement (22, 24) destinés, en cas de montage conforme, à interagir avec un ou plusieurs contre-éléments de positionnement (116, 118) d'une partie supérieure de boîtier (114) d'un boîtier de filtre (110) d'un système de filtre (110) afin de fixer l'élément central (20) dans la partie supérieure de boîtier (114) dans une position angulaire définie par rapport à l'un ou aux plusieurs contre-éléments de positionnement (116, 118), l'élément central (20) comportant au moins un élément de connexion électrique (32) du côté de l'élément qui est destiné, en cas de montage conforme dans le boîtier de filtre (110), à établir la connexion électrique au moins d'un élément de connexion électrique (120) du côté du boîtier.

2. Élément filtrant selon la revendication 1, l'un ou les plusieurs éléments de positionnement (22, 24) étant réalisés en tant que broches (30) évoluant parallèlement à l'axe longitudinal (L) et dépassant de préférence en direction axiale du disque d'extrémité (16).

3. Élément filtrant selon la revendication 1, les éléments de positionnement (22, 24) étant réalisés en tant que tronçons de rampe (301) évoluant de manière circonférentielle sur au moins un rayon.

4. Élément filtrant selon la revendication 3, deux ou plusieurs tronçons de rampe (301) répartis sur la circonférence étant disposés sur le rayon, au moins au nombre d'une.

5. Élément filtrant selon la revendication 3 ou 4, les éléments de positionnement (22, 24) réalisés en tant que tronçons de rampe (301) dépassant en sens longitudinal (L) du et/ou entourant en sens radial l'élément de connexion électrique (32) du côté de l'élément, au moins au nombre d'un.

6. Élément filtrant selon au moins une des revendications 3 à 5, l'élément central (20) comportant une portion de douille (302) qui entoure l'élément de connexion électrique (32) du côté de l'élément, au moins au nombre d'un, et dont la surface est pourvue de préférence des tronçons de rampe (301).

7. Élément filtrant selon l'une des revendications précédentes, l'élément central (20) étant réalisé en tant que filtre-tamis (34).

8. Élément filtrant selon l'une des revendications précédentes, un tube central (42) étant placé à l'intérieur (18) du soufflet de filtre (12) qui entoure l'élément central (20) en sens radial, le tube central (42) étant pourvu sur une face extérieure radiale ou une face intérieure radiale d'un milieu de coalescence (44) réparti sur la surface.

9. Élément filtrant selon l'une des revendications précédentes, le deuxième disque d'extrémité (16) étant doté d'un élément de centrage (40) destiné à centrer l'élément filtrant en sens radial, en cas de montage conforme, dans le boîtier de filtre (110).

10. Élément filtrant selon l'une des revendications précédentes, un premier joint (36) étant prévu sur le premier disque d'extrémité (14) et un deuxième joint (38) étant prévu sur le deuxième disque d'extrémité (16) afin d'étancher de manière conforme entre un côté de fluide brut (50) et un côté de fluide pur (52) du système de filtre (100) et/ou de l'environnement.

11. Élément filtrant selon la revendication 10, le deuxième joint (38) étant placé sur l'élément de centrage (40).

12. Élément filtrant selon la revendication 10 ou 11, l'élément central (20) étant disposé en sens radial à l'intérieur du premier et du deuxième joints (36, 38).

13. Système de filtre (100) destiné à filtrer un fluide, comprenant
- un boîtier de filtre (110) constitué d'une partie supérieure de boîtier (114) et d'une partie inférieure de boîtier (112) avec un axe de boîtier (M),
- une tubulure d'entrée (106) placée sur la partie supérieure du boîtier (110) et destinée à introduire un fluide à filtrer,
- une tubulure de sortie (108) placée sur la partie supérieure du boîtier (110) et destinée à évacuer le fluide filtré,
- un élément filtrant (10) selon l'une des revendications précédentes qui sépare un côté de fluide brut (50) d'un côté de fluide pur (52) de manière étanche aux fluides,
l'élément filtrant (10) comprenant un soufflet de filtre (12) disposé autour de l'axe longitudinal (L) de l'élément filtrant (10) ainsi qu'un élément central (20) monté de manière rotative par rapport au soufflet de filtre (12), à l'intérieur (18) du soufflet de filtre (12), autour de l'axe longitudinal (L), l'élément central (20) comportant un ou plusieurs éléments de positionnement (22, 24) destinés à interagir avec un ou plusieurs contre-éléments de positionnement (116, 118) de la partie supérieure de boîtier (114) afin de fixer l'élément central (20) dans la partie supérieure de boîtier (114) dans une position angulaire définie par rapport à l'un ou aux plusieurs contre-éléments de positionnement (116, 118).

14. Système de filtre selon la revendication 13, la partie supérieure de boîtier (114) étant disposée de manière rotative autour de l'axe de boîtier (M) afin d'obturer le boîtier de filtre (110) vis-à-vis de la partie inférieure de boîtier (112).

15. Système de filtre selon la revendication 13 ou 14, l'un ou les plusieurs contre-éléments de positionnement (116, 118) étant réalisés en tant qu'éléments d'arrêt radiaux (122,122') qui sont réalisés en particulier en tant que demi-cylindres, demi-bagues ouverts sur un côté ou en tant que contre-tronçons de rampe (122').

16. Système de filtre selon la revendication 14 ou 15, l'un ou les plusieurs éléments de positionnement (22, 24) pouvant être entraînés par l'un ou les plusieurs contre-éléments de positionnement (116, 118) lorsque la partie supérieure de boîtier (114) tourne à l'inverse de la partie inférieure de boîtier (112) autour de l'axe de boîtier (M) et que l'élément filtrant (10) est inséré dans la partie inférieure de boîtier (112).

17. Système de filtre selon les revendications 13 à 16, la partie supérieure de boîtier (114) comportant au moins un élément de connexion électrique (120) du côté du boîtier qui peut être connecté de manière étanche aux fluides, lors de la fermeture du boîtier de filtre (110), à un élément de connexion électrique (120) du côté de l'élément disposé sur l'élément filtrant (10).

18. Système de filtre selon la revendication 17, l'élément de connexion électrique (120) du côté du boîtier, au moins au nombre d'un, pouvant être enfiché dans l'élément de connexion électrique (32) du côté de l'élément, au moins au nombre d'un.

19. Système de filtre selon les revendications 13 à 18, la partie supérieure de boîtier (114) comportant un logement intérieur (124) servant à étancher entre le côté de fluide brut (50) et le côté de fluide pur (52) et/ou à centrer l'élément filtrant (10) en sens radial dans le boîtier de filtre (110), en cas d'interaction conforme avec un élément de centrage (40) de l'élément filtrant (10).
